# EUROPÄISCHE PATENTSCHRIFT

(11) **EP 4 309 804 B1**
(45) Veröffentlichungstag und Bekanntmachung des Hinweises auf die Patenterteilung: **15.04.2026**
(21) Anmeldenummer: 23179905.7
(22) Anmeldetag: 16.06.2023
(51) Int. Cl.: B05C 11/10, B29C 48/475, B29B 13/02, B67D 7/64

(54) **FÖRDERVORRICHTUNG ZUM FÖRDERN EINER PASTÖSEN MASSE SOWIE FOLGEPLATTE FÜR EINE SOLCHE**
CONVEYOR DEVICE FOR CONVEYING A PASTY MASS AND SUBSEQUENT PLATE FOR SUCH A CONVEYOR
DISPOSITIF DE TRANSPORT POUR TRANSPORTER UNE MASSE PÂTEUSE ET PLAQUE DE SUIVI POUR UN TEL DISPOSITIF

(30) Priorität: 20.06.2022 DE 102022115312
(43) Veröffentlichungstag der Anmeldung: 24.01.2024
(73) Patentinhaber: Glaston Germany GmbH, 75242 Neuhausen-Hamberg (DE)
(72) Erfinder: Gerl, Florian, 75399 Unterreichenbach (DE)
(74) Vertreter: Twelmeier Mommer & Partner

(56) Entgegenhaltungen:
- CH-A5- 688 958
- JP-U- H0 672 669
- US-A- 4 195 755
- US-A- 5 971 211
- US-B1- 10 486 958

## Beschreibung

Die Erfindung geht aus von einer Folgeplatte zum Aufsetzen auf eine pastöse Masse mit den im Oberbegriff des Anspruchs 1 angegebenen Merkmalen. Eine solche Folgeplatte ist aus der US 5,971,211 A bekannt. Ähnliche Folgeplatten sind auch aus CH 688 958 A5, US 10,486,958 B1, JP H06-70669 U und US 4,195,755 A bekannt.

Eine Fördervorrichtung zum Fördern einer pastösen Masse in der Isolierglasfertigung mit den im Oberbegriff des Anspruchs 11 angegebenen Merkmalen ist aus der DE 689 05 676 T2 bzw. EP 0 347 269 B1 bekannt. Diese Fördervorrichtung hat einen Träger für einen zylindrischen Behälter mit pastöser Masse, nämlich aus butylkautschukartigem organischem Material. Oberhalb des Trägers ist eine vertikal verschiebbare Folgeplatte zum Aufsetzen auf die Oberfläche der pastösen Masse angeordnet. An die Folgeplatte ist eine Förderleitung zum Weitertransport der pastösen Masse angeschlossen. Die Folgeplatte hat eine Oberseite, eine Unterseite und wenigstens eine Auslassöffnung, welche mit der Förderleitung verbunden ist. An der Unterseite der Folgeplatte sind mehrere nach unten ragende Fortsätze angeordnet. Die Fortsätze sind zylindrisch und sind um die Auslassöffnung herum angeordnet. Die Fortsätze sind zum Eintauchen in die pastösen Masse eingerichtet.

Aus der EP 0 171 309 A1 ist eine Fördervorrichtung mit einer Folgeplatte bekannt, an deren Unterseite mehrere nach unten ragende Fortsätze angeordnet sind, welche ebenfalls eine zylindrische Form aufweisen. Die zylindrischen Fortsätze weisen eine in einem Vertikalschnitt durch die Folgeplatte gemessene Höhe auf, die an einer Stelle in der Nähe der Auslassöffnung größer als an einer weiter von der Auslassöffnung entfernten Stelle ist. Die Folgeplatte bzw. die Fortsätze sind beheizt.

Aus der EP 0 943 583 A1 ist eine Fördervorrichtung mit einer beheizbaren Folgeplatte bekannt, an deren Unterseite mehrere nach unten ragende Vorsprünge angeordnet sind. Die Vorsprünge sind als zulaufende Rippen ausgebildet, welche konzentrisch zueinander um die Auslassöffnung angeordnet sind.

Die DE 10 2007 051 610 A1 offenbart eine Vorrichtung zum Einspritzen eines Stranges aus einer pastösen Masse in den Zwischenraum zwischen zwei Glasplatten einer Isolierglasscheibe sowie eine Fördervorrichtung und eine Folgeplatte der eingangs genannten Art.

Aus der DE 10 2004 030 654 A1 ist eine nicht gattungsgemäße Fördervorrichtung für viskoses Material bekannt, welche eine kreisförmige Folgeplatte mit einer mittig angeordneten Auslassöffnung aufweist. An der Unterseite der Folgeplatte sind um die Auslassöffnung herum keine nach unten ragenden Fortsätze angeordnet. Die Auslassöffnung weist an der Unterseite der Folgeplatte einen Trichter und ein den Trichter überdeckendes Abdeckelement. Das Abdeckelement hat Durchtrittsöffnungen für das viskose Material. Das Abdeckelement ist als Gitter ausgeführt, das einen zentralen Ring und sich vom Ring in radialer Richtung erstreckende Arme aufweist. Über die Arme ist das Gitter an der Folgeplatte angeschraubt und schließt bündig mit der Unterseite der Folgeplatte ab, um einen größtmöglichen Anteil der im Trichter enthaltenen Materialmenge beim Abheben der Folgeplatte zurückzuhalten.

Aus der EP 0 340 493 B1 ist ein Behälter für pastöse Massen bekannt, welcher aus einem zylindrischen Gehäuse besteht, das durch eine in Längsrichtung angeordnete Trennwand in zwei separate Kammern unterteilt ist. Am oberen Ende jeder Kammer ist eine Auslassöffnung vorgesehen. In jeder Kammer ist ein halbkreisförmiger Kolben angeordnet, der in Richtung zur Auslassöffnung verschiebbar ist. Der Kolbenboden ist konvex, sodass die mit der pastösen Masse in Berührung stehende Oberfläche des Kolbens eine Wölbung in Richtung zur pastösen Masse hin aufweist. Auf der der pastösen Masse abgewandten Seite des Kolbenbodens sind Verstärkungsteile angeordnet, welche mit der pastösen Masse nicht in Kontakt kommen. Die Verstärkungsteile sind Rippen unterschiedlicher Höhen, die unter einem derartigen Winkel zueinander angeordnet sind, dass die Schnittpunkte der die Rippen verlängernden gedachten Achsen außerhalb des halbkreisförmigen Kolbens liegen.

Aus der US 4 090 640 A1 ist eine Fördervorrichtung für Heißschmelzkleber mit einer beheizbaren Folgeplatte bekannt, auf deren Oberseite eine Isolierung vorgesehen ist.

Der Erfindung liegt die Aufgabe zugrunde, eine Fördervorrichtung und eine Folgeplatte der eingangs genannten Art zu verbessern.

Diese Aufgabe wird gelöst durch eine Folgeplatte mit den in Anspruch 1 angegebenen Merkmalen und eine Fördervorrichtung mit den in Anspruch 11 angegebenen Merkmalen. Vorteilhafte Weiterbildungen der Erfindung sind Gegenstand der Unteransprüche.

Eine erfindungsgemäße Fördervorrichtung enthält einen Träger für ein Gebinde mit pastöser Masse, beispielsweise mit einem Fassungsvermögen von 10 Liter bis 500 Liter, insbesondere 20 Liter bis 200 Liter. Insbesondere ist das Gebinde ein zylindrischer Behälter, beispielsweise ein Fass, insbesondere ein Standardfass mit 200 Litern. Je nach Typ der Anlage zur Isolierglasfertigung können aber auch Fässer mit 20 Litern verwendet werden. Der Träger kann beispielsweise als Trägerplatte ausgebildet sein. Oberhalb des Trägers ist eine vertikal verschiebbare Folgeplatte zum Aufsetzen auf die Oberfläche der pastösen Masse angeordnet. An die Folgeplatte ist eine Förderleitung zum Weitertransport der pastösen Masse angeschlossen. In der Folgeplatte ist wenigstens eine Auslassöffnung zum Verbinden der Folgeplatte mit der Förderleitung angeordnet. In der Förderleitung kann in an sich bekannter Weise eine Pumpe, beispielsweise eine Zahnradpumpe, zum Weitertransport der pastösen Masse vorgesehen sein.

Die Fördervorrichtung wird insbesondere in der Isolierglasfertigung eingesetzt, um eine große Menge einer pastösen Masse, beispielsweise einer Klebemasse oder eines Heißschmelzklebers, bereitzustellen. Sie kann Teil einer Anlage zur Fertigung von Isolierglasscheiben sein, die aus zwei oder mehreren Glastafeln zusammengesetzt werden. Die Glastafeln einer Isolierglasscheibe werden jeweils mittels eines Abstandhalters in einem vorbestimmten Abstand zueinander gehalten. Die pastöse Masse kann über die Förderleitung zu einer Auftragsvorrichtung gefördert werden, mit welcher ein Strang aus der pastösen Masse gebildet wird. Der Strang kann auf eine Glastafel aufgetragen werden, um einen Abstandshalter zwischen zwei Glastafeln zu bilden, wie es beispielsweise aus der EP 0 823 318 A1 bekannt ist. Die erfindungsgemäße Fördervorrichtung kann die pastöse Masse aber auch zu einer Vorrichtung zum Versiegeln von Isolierglasscheiben fördern, wie sie beispielsweise aus der DE 10 2007 051 610 A1 bekannt ist. Dort wird ein Strang aus der pastösen Masse in den Zwischenraum zwischen zwei Glastafeln eingespritzt, um aus den bereits auf Abstand zueinander gehaltenen Glastafeln eine Isolierglasscheibe zu bilden. Die pastöse Masse kann beispielsweise ein Butylkautschuk, ein Polyisobutylen, ein organisches Polysulfid oder ein Polyurethan sein.

Die erfindungsgemäße Folgeplatte hat eine Oberseite und eine Unterseite. Sie kann eine Umfangsfläche aufweisen, welche sich zwischen ihrer Oberseite und ihrer Unterseite erstreckt. Die Folgeplatte kann beispielsweise kreisförmig sein, insbesondere, wenn es sich bei den Gebinden mit der pastösen Masse um im Wesentlichen kreiszylindrische Standard-Fässer handelt. Zur Abdichtung der Folgeplatte zu der Innenseite einer Wand des zylindrischen Behälters kann an der Umfangsfläche der Folgeplatte in an sich bekannter Weise eine Dichtung angeordnet sein. An der Unterseite der Folgeplatte sind mehrere nach unten ragende Fortsätze angeordnet. Die nach unten ragenden Fortsätze sind um die wenigstens eine Auslassöffnung herum angeordnet. Wenigstens einer der Fortsätze ist als Rippe ausgebildet, welche sich entlang der Unterseite der Folgeplatte erstreckt. Bezogen auf die Auslassöffnung erstreckt sich die Rippe radial nach außen. Mit Fortsätzen, welche derart als radial verlaufende Rippen ausgestaltet sind, kann pastöse Masse aus dem äußeren Bereich des Behälters und/oder dem äußeren Bereich der Folgeplatte sehr gut zu der zentral angeordneten Auslassöffnung geleitet werden. Ferner kann der Strömungswiderstand für die pastöse Masse verringert werden, welche entlang der Unterseite der Folgeplatte zur Auslassöffnung strömt.

Nachdem ein oben offenes Gebinde mit pastöser Masse auf dem Träger der Fördervorrichtung positioniert worden ist, wird die Folgeplatte nach unten bewegt und mit ihrer Unterseite auf die Oberfläche der in dem Gebinde befindlichen pastösen Masse aufgesetzt. Anschließend wird die Folgeplatte noch weiter nach unten bewegt, sodass die Fortsätze an der Unterseite der Folgeplatte in die pastöse Masse eintauchen. Dadurch, dass die Folgeplatte weiter nach unten gedrückt wird, wird die pastöse Masse an den Fortsätzen vorbei zu der Auslassöffnung in der Folgeplatte und von dort in die Förderleitung verdrängt. Die Folgeplatte kann beheizbar sein. Sie kann eine Heizeinrichtung enthalten. In der Folgeplatte und/oder der wenigstens einen Rippe kann ein Heizelement, insbesondere ein elektrisches Heizelement, angeordnet sein. Die Rippen können dementsprechend in der Art von "Kühlrippen" ausgestaltet sein, mit welchen Wärme von der Heizeinrichtung in die pastöse Masse eingeleitet wird, um deren Fließfähigkeit zu verbessern. Die Folgeplatte mit ihren nach unten ragenden Rippen kann insbesondere einstückig als Gussteil ausgebildet sein, insbesondere aus einer gut wärmeleitfähigen Leichtmetall-Legierung.

Mit der erfindungsgemäßen Folgeplatte lässt sich die Förderleistung der Fördervorrichtung erheblich erhöhen. Bei der Entnahme von pastöser Masse aus einem 200 Liter Fass lässt sich der von der Fördervorrichtung geförderte Massenstrom um bis zu 50 % steigern. Die Folgeplatte kann nur eine Auslassöffnung aufweisen, welche mittig in der Folgeplatte angeordnet ist. Gleichwohl ermöglicht die erfindungsgemäße Folgeplatte eine Förderleistung der pastösen Masse von mehr als 1 kg pro Minute, insbesondere mehr als 1,3 kg pro Minute. Dies ist insbesondere für Anlagen zur Isolierglasfertigung vorteilhaft, in welchen Isolierglasscheiben gefertigt werden, bei denen der Abstand der einzelnen Glastafeln zueinander vergrößert ist, um die Isolationswirkung zu verbessern. Dabei wird ein großer Massenstrom der pastösen Masse zur Bildung eines großen Abstandhalters bzw. zur Versiegelung benötigt.

In weiterer Ausgestaltung kann die Folgeplatte mehrere Rippen aufweisen, die sich entlang der Unterseite der Folgeplatte erstrecken. Jede der Rippen kann radial zu der wenigstens einen Auslassöffnung verlaufen. Insbesondere kann jeder der Fortsätze an der Unterseite der Folgeplatte als Rippe ausgebildet sein. Die Rippe, insbesondere jede der Rippen, kann eine in Umfangsrichtung um die Auslassöffnung gemessene Breite haben, die an einer Stelle in der Nähe der Auslassöffnung kleiner ist als an einer weiter von der Auslassöffnung entfernten Stelle. Die Breite kann sich mit kleiner werdendem Abstand zu der Auslassöffnung, insbesondere stetig, verkleinern. Jede der Rippen kann sich zu der Auslassöffnung hin verjüngen. Eine Verkleinerung der Rippenbreite zur Mitte der Folgeplatte begünstigt die Strömung der pastösen Masse hin zu der dort befindlichen Auslassöffnung.

Jede der Rippen weist eine radial zur Auslassöffnung gemessene Länge auf. Die Länge der Rippen wird in einer Ansicht von unten auf die Folgeplatte gemessen. Die Länge einer Rippe kann sich von der Länge einer benachbarten Rippe unterscheiden. Eine der Rippen weist eine kleinere Länge und eine der Rippen weist eine größere Länge auf. Die Rippe kleinerer Länge kann einen größeren Abstand zu der Auslassöffnung aufweisen als die Rippe größerer Länge. Dieser Abstand wird radial zu der Auslassöffnung gemessen. Die Rippe größerer Länge kann insbesondere zwischen zwei Rippen kleinerer Länge angeordnet sein. Damit lässt sich die um die Auslassöffnung herum angeordnete Anzahl von Rippen vergrößern. Die mit der pastösen Masse in Kontakt kommende Fläche an der Unterseite der Folgeplatte kann erheblich vergrößert werden, sodass der Wärmeeintrag in die pastöse Masse vergrößert werden kann. Bezogen auf eine ebene Vergleichsfläche, welche von der Wandung des Behälters umschlossen wird, ist die Fläche der mit den Rippen versehenen Unterseite um den Faktor 2 bis 5, insbesondere um den Faktor 3 bis 4, größer als diese Vergleichsfläche.

In weiterer Ausgestaltung der Folgeplatte kann ein Zwischenraum, welcher zwischen zwei zueinander benachbarten Rippen angeordnet ist, einen Führungskanal für die pastöse Masse ausbilden. Der von zwei benachbarten Rippen gebildete Führungskanal und/oder der zwischen zwei benachbarten Rippen angeordnete Zwischenraum erstreckt sich von einer Stelle in der Nähe der Auslassöffnung entlang der Unterseite der Folgeplatte in radialer Richtung zu einer weiter von der Auslassöffnung entfernten Stelle der Folgeplatte. In anderen Worten erstreckt sich der Führungskanal und/oder der Zwischenraum von einem außenliegenden Bereich der Folgeplatte radial einwärts. Der Führungskanal ist - in Strömungsrichtung der entlang der Unterseite der Folgeplatte zur Auslassöffnung fließenden Masse gesehen - oben durch die Unterseite der Folgeplatte und seitlich durch die beiden Rippen begrenzt. Nach unten ist der Führungskanal offen. Der Führungskanal und/oder der Zwischenraum hat somit eine Form einer an der Unterseite der Folgeplatte angeordneten Rinne. Durch eine Mehrzahl von benachbarten Rippen können mehrere Führungskanäle um die Auslassöffnung herum gebildet werden. Jeder Führungskanal kann bezogen auf die Auslassöffnung radial an der Unterseite der Folgeplatte entlangführen. Dies kann den Strömungswiderstand für die pastöse Masse an der Unterseite der Folgeplatte weiter verringern.

Erfindungsgemäß weist der zwischen zwei benachbarten Rippen angeordnete Zwischenraum eine variierende Höhe auf. Der vom Zwischenraum ausgebildete Führungskanal kann ebenfalls eine variierende Höhe aufweisen. Die Höhe des Zwischenraums wird in vertikaler Richtung, insbesondere in einem vertikalen Schnitt durch die Folgeplatte, gemessen. Die Höhe des Zwischenraums ist an einer Stelle in der Nähe der Auslassöffnung größer als an einer weiter von der Auslassöffnung entfernten Stelle. Insbesondere kann sich die Höhe mit abnehmendem Abstand zu der Auslassöffnung, insbesondere stetig, vergrößern. Die Höhe vergrößert sich entlang einer Kurve mit wechselnder Krümmung. In einem Vertikalschnitt durch die Folgeplatte kann die Unterseite der Folgeplatte im Bereich des Zwischenraums eine glockenförmige Kontur aufweisen.

In weiterer Ausgestaltung kann der Führungskanal und/oder der zwischen zwei benachbarten Rippen angeordnete Zwischenraum eine variierende Breite aufweisen. Die Breite des Zwischenraums wird in Umfangsrichtung um die Auslassöffnung, insbesondere in einer Ansicht von unten auf die Folgeplatte, gemessen. Die Breite des Zwischenraums kann in der Nähe der Auslassöffnung kleiner sein als an einer weiter von der Auslassöffnung entfernten Stelle. Die Breite des Zwischenraums kann sich mit abnehmendem Abstand zu der Auslassöffnung, insbesondere stetig, verkleinern. Der Zwischenraum und/oder der Führungskanal hat eine freie Querschnittsfläche für die pastöse Masse. Die Querschnittsfläche des Zwischenraums wird als Produkt aus seiner Breite und seiner Höhe berechnet. Die Querschnittsfläche des Zwischenraums ist an einer Stelle in der Nähe der Auslassöffnung größer als einer weiter von der Auslassöffnung entfernten Stelle. Die Querschnittsfläche des Zwischenraums kann sich mit abnehmendem Abstand zu der Auslassöffnung, insbesondere stetig, vergrößern. Hierdurch kann gewährleistet werden, dass der Strömungswiderstand für die pastöse Masse aufgrund der zur Auslassöffnung hin kleiner werdenden Breite des Zwischenraums nicht derart vergrößert wird, dass das Fördern eines großen Massenstromes beeinträchtigt wäre.

In Ausgestaltung der Erfindung kann die Folgeplatte mehrere, insbesondere zwei, Auslassöffnungen aufweisen. In einem solchen Fall kann an der Unterseite der Folgeplatte eine Trennrippe angeordnet sein, welche sich zwischen zwei der bzw. zwischen den beiden Auslassöffnungen entlang der Unterseite der Folgeplatte erstreckt. Die Trennrippe erstreckt sich nicht in radialer Richtung zu den Auslassöffnungen, sondern quer dazu. Im Falle von mehreren Auslassöffnungen in der Folgeplatte sind die vorgenannten Eigenschaften der Rippen jeweils auf diejenige der Auslassöffnungen zu beziehen, auf welche die entsprechende Rippe bzw. der entsprechende Zwischenraum radial zuläuft.

In weiterer Ausgestaltung kann die Unterseite der Rippen, insbesondere aller Rippen, in einer horizontalen Ebene liegen. Die Unterseite der Rippen kann senkrecht zu der Wandung des Behälters mit der pastösen Masse verlaufen. Die Höhe der Rippen entspricht dann der Höhe der Zwischenräume. Auf der Oberseite der Folgeplatte kann eine Wärmedämmung angeordnet sein. Dadurch können Wärmeverluste der Heizeinrichtung der Folgeplatte verringert werden.

Die Fördervorrichtung kann ferner einen Stützmantel für den Behälter mit der pastösen Masse enthalten. Der Stützmantel ist eingerichtet, außen entlang des Umfangs des Behälters angebracht zu werden. Wenigstens ein Umfangsabschnitt des Stützmantels ist aus einem Gitter, insbesondere einem Gewebe, aus Draht oder faserverstärkten Kunststoff-Filamenten gebildet. Ein solcher Stützmantel ist aufgrund seiner Stabilität gut geeignet, den Behälter mit der pastösen Masse in einer erfindungsgemäßen Fördervorrichtung zu unterstützen, wenn die Folgeplatte mit hohem Druck nach unten in den Behälter hineingedrückt wird, um große Massenströme aus dem Behälter zu fördern. Gleichzeitig weist ein solcher Stützmantel ein relativ geringes Eigengewicht auf. Er lässt sich deshalb von einem Anlagenbediener beim Wechsel des Behälters mit pastöser Masse ohne zu großen Kraftaufwand handhaben.

Weitere Einzelheiten und Vorteile der Erfindung werden an Ausführungsbeispielen der Erfindung unter Bezugnahme auf die beigefügten Zeichnungen erläutert und gleiche und einander entsprechende Komponenten sind darin mit übereinstimmenden Bezugszahlen versehen. Es zeigen:
- Fig. 1: eine perspektivische Ansicht auf eine vereinfacht dargestellte Fördervorrichtung gemäß der vorliegenden Erfindung,
- Fig. 2: eine perspektivische Ansicht auf die Unterseite einer ersten Variante einer erfindungsgemäßen Folgeplatte,
- Fig. 3: eine Ansicht von unten auf die Folgeplatte der Figur 2,
- Fig. 4: einen Vertikalschnitt durch die Folgeplatte entlang der Schnittfläche IV-IV der Figur 3,
- Fig. 5: eine Schrägansicht auf den Vertikalschnitt der Figur 4,
- Fig. 6: eine Ansicht von unten auf eine zweite Variante einer erfindungsgemäßen Folgeplatte,
- Fig. 7: eine Ansicht von unten auf eine dritte Variante einer erfindungsgemäßen Folgeplatte,
- Fig. 8: eine Ansicht von unten auf eine vierte Variante einer erfindungsgemäßen Folgeplatte,
- Fig. 9: eine Schrägansicht ähnlich Figur 5 auf einen Vertikalschnitt durch die Folgeplatte der Figur 8,
- Fig. 10: eine Schrägansicht von unten auf die Folgeplatte der Figur 8,
- Fig. 11: eine schematische Schrägansicht eines Stützmantels für die Fördervorrichtung der Figur 1,
- Fig. 12: eine Ansicht von unten auf eine fünfte Variante einer erfindungsgemäßen Folgeplatte,
- Fig. 13: einen Vertikalschnitt durch die Folgeplatte entlang der Schnittfläche XIII-XIII der Figur 12.

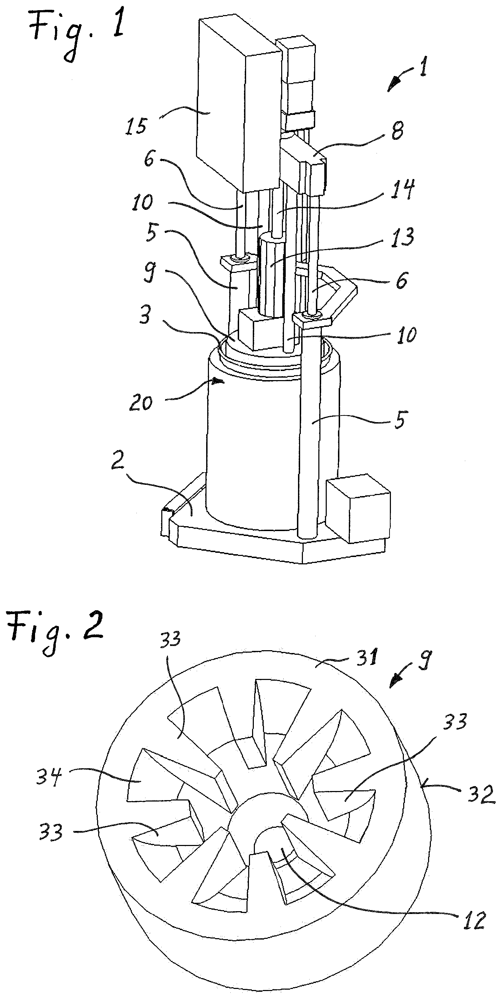

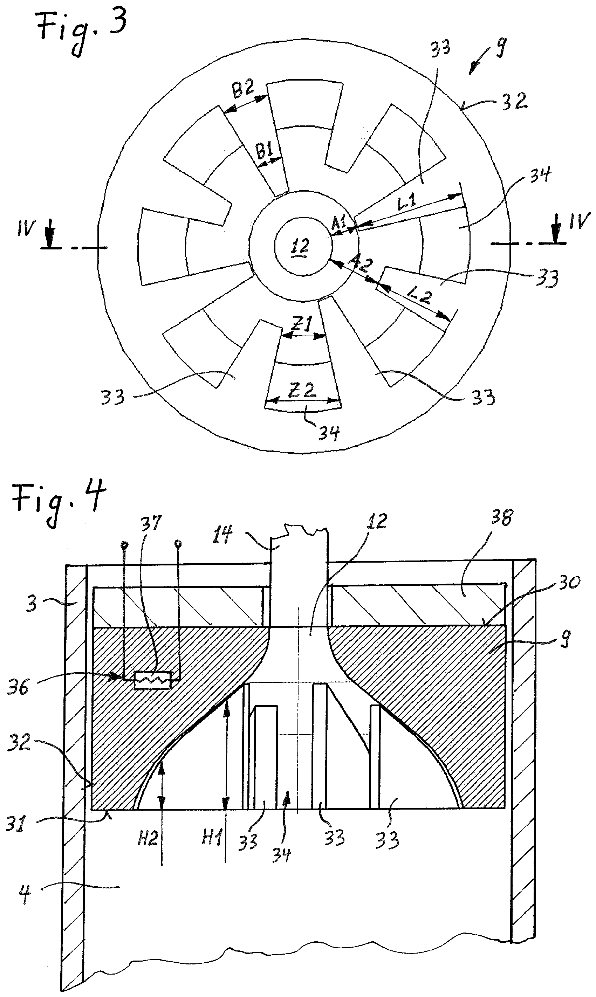

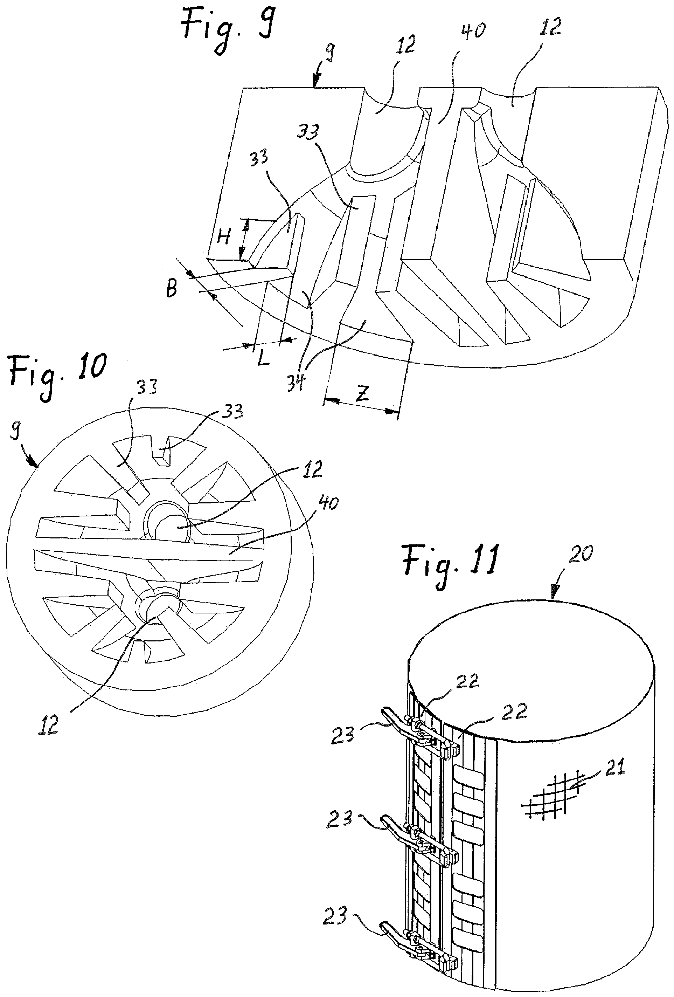

In Figur 1 ist eine Fördervorrichtung 1 gemäß der Erfindung dargestellt. Sie enthält einen Träger 2 für einen zylindrischen Behälter 3 mit pastöser Masse 4. Der Träger 2 ist als Trägerplatte ausgebildet, auf welchem der oben offene Behälter 3 aufgesetzt wird. An dem Träger 2 sind zwei hydraulische Zylinder 5 angebracht. Die Zylinder 5 haben jeweils eine Kolbenstange 6, welche über eine zentrale Traverse 8 miteinander verbunden sind. Eine Folgeplatte 9 ist über zwei senkrechte Stangen 10 unten an der Traverse 8 befestigt. Durch Einziehen der Kolbenstangen 6 in die hydraulischen Zylinder 5 wird die Folgeplatte 9 auf die im Behälter 3 befindliche pastöse Masse 4 aufgesetzt, vgl. Figur 4. Durch weiteres Einziehen der Kolbenstangen 6 wird die pastöse Masse 4 durch eine Auslassöffnung 12 in der Folgeplatte 9 in eine Förderleitung 14 bzw. in eine oberhalb der Folgeplatte 9 befindliche Pumpe 13 gedrückt, welche die pastöse Masse 4 weiterfördert. Die Fördervorrichtung 1 ist Teil einer nicht dargestellten Anlage zur Isolierglasfertigung. Mit der Förderleitung 14 wird die pastöse Masse 4 in an sich bekannter Weise zu einer Auftragsvorrichtung weitertransportiert, wie es beispielsweise aus der EP 0 171 309 A1 oder der DE 10 2007 051 610 A1 bekannt ist. Die Fördervorrichtung 1 hat eine Steuereinrichtung 15, mit welcher die Zylinder 5 und die Pumpe 13 gesteuert werden können. Um den Behälter 3 ist ein Stützmantel 20 angeordnet. Der Stützmantel 20, vgl. auch Figur 11, stabilisiert den Behälter 3, wenn die Folgeplatte 9 durch die Zylinder 5 in den Behälter 3 hineingezogen wird. Ein Umfangsabschnitt des Stützmantels 20 ist aus einem Drahtgewebe 21 gebildet. Das Drahtgewebe 21 kann beispielsweise aus Drähten mit einem Durchmesser von 0,4 mm bis 2,0 mm, insbesondere von 0,5 mm bis 1,0 mm, bestehen. Die in Umfangsrichtung des Stützmantels 20 verlaufenden Drähte sind dünner als die in Längsrichtung des Stützmantels verlaufenden Drähte des Drahtgewebes 21. Dadurch kann sich das Drahtgewebe sehr gut an den Außenumfang des Behälters 3 anschmiegen. Das Drahtgewebe 21 ist an Leisten 22 befestigt, an welchen drei Spannverschlüsse 23 angebracht sind. Zum Anlegen des Stützmantels 20 an einen Behälter 3 werden die Spannverschlüsse 23 zunächst geöffnet. Dann können die beiden Leisten 22 aufgrund der Flexibilität des Drahtgewebes 21 etwas voneinander wegbewegt werden, sodass sich der Durchmesser des Stützmantels 20 vergrößert. Der Stützmantel 20 wird um ein neuen, vollen Behälter 3 herumgelegt. Anschließend werden die Spannverschlüsse 23 wieder geschlossen. Dadurch verringert sich der Umfang des Stützmantels 20 und der Stützmantel 20 spannt sich um den Außenumfang des Behälters 3 und stabilisiert diesen. Aufgrund der Flexibilität des Drahtgewebes 21 und seines geringen Gewichts, lässt sich der Stützmantel 20 sehr leicht durch einen Anlagenbediener allein handhaben.

Die in den Figuren 2 bis 10 und 12 bis 13 dargestellten Varianten der Folgeplatte 9 haben jeweils eine Oberseite 30, eine Unterseite 31 und eine sich zwischen der Oberseite 30 und der Unterseite 31 erstreckende Umfangsfläche 32. An der Umfangsfläche 32 kann in nicht dargestellter, aber an sich bekannter Weise eine Dichtung angeordnet sein, welche die Folgeplatte 9 zu der Wandung des Behälters 3 abdichtet. Die Folgeplatte 9 weist an ihrer Unterseite 31 mehrere nach unten ragende Fortsätze in Form von Rippen 33 auf. Die Rippen 33 sind um die Auslassöffnung 12 herum angeordnet und sind zum Eintauchen in die pastöse Masse 4 eingerichtet. Beim Einziehen der Kolbenstangen 6 werden die Rippen 33 von oben in die pastöse Masse 4 eingedrückt. Die Rippen 33 tauchen in die pastöse Masse 4 ein. Die pastöse Masse 4 fließt entlang der Unterseite 31 an den Rippen 33 vorbei und wird durch die Auslassöffnung 12 aus dem Behälter 3 gedrückt. Die Folgeplatte 9 enthält eine Heizeinrichtung 36 mit mehreren elektrischen Heizelementen 37, vgl. Figur 4. Ein Heizelement 37 ist in einer der Rippen 33 angeordnet. Auf der Oberseite 30 der Folgeplatte 9 ist eine Wärmedämmung 38 angeordnet. In nicht dargestellter Ausgestaltung kann um das Drahtgewebe 21 des Stützmantels 20 eine Wärmedämmung angeordnet sein.

Durch die Wärmedämmung 38 kann der Wärmeverlust verringert werden. Eine unerwünschte Abkühlung eines vorgewärmten Behälters 3 bzw. Verluste der durch die Heizeinrichtung 36 eingebrachten Wärme lassen sich dadurch vermindern.

Die Rippen 33 haben eine in Umfangsrichtung um die Auslassöffnung 12 gemessene Breite B und eine radial zur Auslassöffnung 12 gemessene Länge L, vgl. Figuren 3, 9 und 12. Eine Breite B1 in der Nähe der Auslassöffnung 12 ist kleiner als eine Breite B2 an einer weiter von der Auslassöffnung 12 entfernten Stelle, vgl. Figur 3. In den Figuren 3 und 9 ist ferner ersichtlich, dass sich eine Länge L1 einer Rippe 33 von der Länge L2 einer benachbarten Rippe 33 unterscheidet. Die Rippe 33 größerer Länge L1 weist einen radial zur Auslassöffnung 12 gemessenen Abstand A1 zu der Auslassöffnung 12 auf. Die Rippe 33 kleinerer Länge L2 weist einen Abstand A2 zu der Auslassöffnung 12 auf. Der Abstand A2 ist größer als der Abstand A1. Die Rippe 33 größerer Länge L1 ist zwischen zwei Rippen 33 kleinerer Länge L2 angeordnet. Dadurch lässt sich die Fläche an der Unterseite 31, welche mit der pastöse Masse 4 in Kontakt kommt, erheblich vergrößern. Die vergrößerte Fläche wird mit einer Vergleichsfläche verglichen. Als Vergleichsfläche wird die Größe einer ebenen Fläche herangezogen, welche von der Wandung des Behälters 3 umschlossen ist. Für ein Standard-Fass mit 200 l Fassungsvermögen, welches einen Durchmesser von 570 mm aufweist, beträgt die Vergleichsfläche 0,26 m². Die mit der pastösen Masse 4 in Kontakt kommende Fläche an der Unterseite 31 ist um den Faktor 3 bis 4 größer als die Vergleichsfläche. Sie kann im vorliegenden Beispiel 0,8 m² bis 1,0 m² betragen.

Zwischen zwei benachbarten Rippen 33 befindet sich jeweils ein Führungskanal bzw. Zwischenraum 34. Der Zwischenraum 34 weist eine in vertikaler Richtung gemessene Höhe H, vgl. Vertikalschnitte der Figuren 4, 9 und 13, sowie eine in Umfangsrichtung um die Auslassöffnung 33 gemessene Breite Z, vgl. Figuren 3, 9 und 12, auf. Die Höhe H1 des Zwischenraums 34 an einer Stelle in der Nähe der Auslassöffnung 12 ist größer als eine Höhe H2 des Zwischenraums 34 an einer weiter von Auslassöffnung 12 entfernten Stelle. Die Höhe H vergrößert sich stetig mit abnehmendem Abstand zu der Auslassöffnung 12 entlang einer Kurve mit wechselnder Krümmung. Im Zwischenraum 34 weist die Unterseite der Folgeplatte 9 somit eine glockenförmige Kontur auf, vgl. Figuren 4, 5 und 9. Die Höhe H der Zwischenräume 34 an einer Stelle, welche den Abstand A von der Auslassöffnung 12 aufweist, entspricht der Höhe der Rippen 33 an einer gleich weit von der Auslassöffnung 12 entfernten Stelle. An einer Stelle in der Nähe der Auslassöffnung 12 hat der Zwischenraum 34 eine Breite Z1, welche kleiner ist als eine Breite Z2 an einer weiter von der Auslassöffnung 12 entfernten Stelle, vgl. Figur 3, 9 und 12. Mit abnehmendem Abstand A zu der Auslassöffnung 12 verkleinert sich die Breite Z stetig entlang der Rippen 33. Eine freie Querschnittsfläche Z*H des Zwischenraums 34, welche als Produkt aus der Breite Z und der Höhe H berechnet wird, ist an einer Stelle in der Nähe der Auslassöffnung 12 größer als an einer weiter von der Auslassöffnung 12 entfernten Stelle. Mit abnehmenden Abstand zu der Auslassöffnung 12 vergrößert sich die Querschnittsfläche Z*H stetig entlang der Rippen 33.

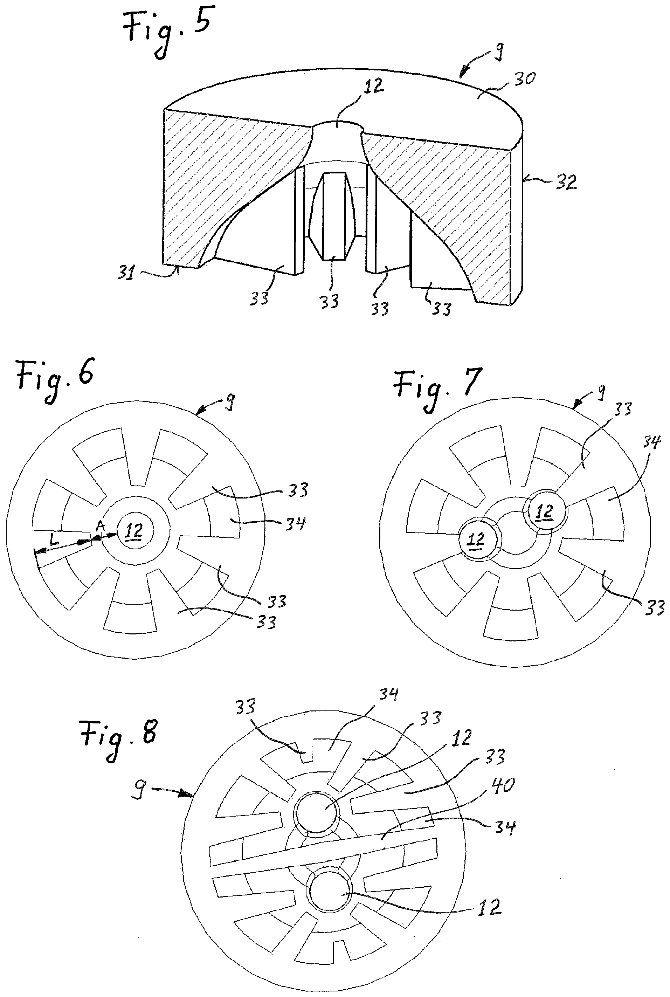

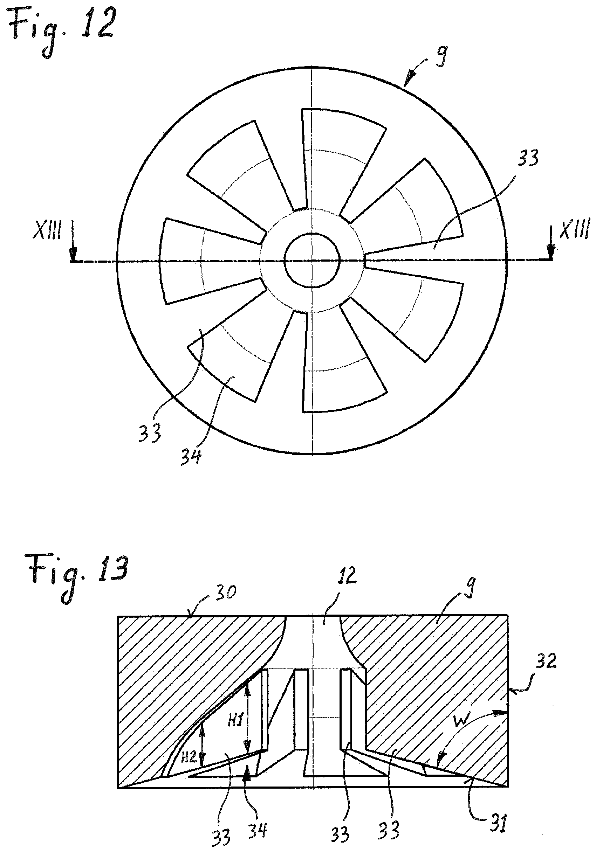

Statt acht Rippen 33 in Figur 3 sind bei dem in Figur 6 dargestellten Ausführungsbeispiel der Folgeplatte 9 nur sieben Rippen 33 vorgesehen, welche alle dieselbe Länge L und denselben Abstand A zur Auslassöffnung 12 aufweisen. Die in den Figuren 7 bis 10 dargestellten Varianten der Folgeplatte 9 weisen jeweils zwei Auslassöffnungen 12 auf. Bei der in den Figuren 8 bis 10 dargestellten Variante verläuft zwischen den beiden Auslassöffnungen 12 eine Trennrippe 40. Die Trennrippe 40 verläuft quer zu einer in Bezug auf die Auslassöffnungen 12 radialen Richtung. Die anderen Rippen 33 erstrecken sich von der jeweiligen Auslassöffnung 12 radial nach außen. Die Rippen 33 weisen unterschiedliche Längen L und Abständes A auf. In den Ausführungsbeispielen der Figuren 12 und 13 ist erkennbar, dass die Unterseite 31 der Folgeplatte 9 bzw. die Unterseite der Rippen 33 in einem Winkel W zu der Umfangsfläche 32 bzw. der Wandung des Behälters 3 orientiert ist, welcher kleiner als 90° ist. Der Winkel W kann im Bereich zwischen 80° und 87° liegen.

**Bezugszeichenliste**

| | | | |
|---|---|---|---|
| 1 | Fördervorrichtung | A, A1, A2 | Abstand |
| 2 | Träger | B, B1, B2 | Rippenbreite |
| 3 | Behälter | H, H1, H2 | Höhe |
| 4 | pastöse Masse | L, L1, L2 | Länge |
| 5 | Zylinder | Z, Z1, Z2 | Zwischenraumbreite |
| 6 | Kolbenstange | W | Winkel |
| 8 | Traverse | | |
| 9 | Folgeplatte | | |
| 10 | Stange | | |
| 12 | Auslassöffnung | | |
| 13 | Pumpe | | |
| 14 | Förderleitung | | |
| 15 | Steuereinrichtung | | |
| 20 | Stützmantel | | |
| 21 | Drahtgewebe | | |
| 22 | Leiste | | |
| 23 | Spannverschluss | | |
| 30 | Oberseite | | |
| 31 | Unterseite | | |
| 32 | Umfangsfläche | | |
| 33 | Rippe | | |
| 34 | Zwischenraum | | |
| 36 | Heizeinrichtung | | |
| 37 | Heizelement | | |
| 38 | Wärmedämmung | | |
| 40 | Trennrippe | | |

## Patentansprüche

1. Folgeplatte (9) zum Aufsetzen auf eine pastöse Masse (4) in einer Fördervorrichtung (1) zum Fördern der pastösen Masse (4) in der Isolierglasfertigung
enthaltend eine Unterseite (31) und wenigstens eine in der Folgeplatte (9) angeordnete Auslassöffnung (12) zum Verbinden mit einer Förderleitung (14), wobei an der Unterseite (31) der Folgeplatte (9) mehrere nach unten ragende Fortsätze um die wenigstens eine Auslassöffnung (12) herum angeordnet sind, die zum Eintauchen in die pastöse Masse (4) eingerichtet sind,
wobei wenigstens einer der Fortsätze als eine Rippe (33) ausgebildet ist, die sich - bezogen auf die Auslassöffnung (12) - radial nach außen entlang der Unterseite (31) der Folgeplatte (9) erstreckt,
**dadurch gekennzeichnet,**
**dass** ein zwischen zwei benachbarten Rippen (33) angeordneter Zwischenraum (34) eine in vertikaler Richtung gemessene Höhe (H, H1, H2) aufweist, welche an einer Stelle (H1) in der Nähe der Auslassöffnung (12) größer als an einer weiter von der Auslassöffnung (12) entfernten Stelle (H2) ist und sich entlang einer Kurve mit wechselnder Krümmung vergrößert.

2. Folgeplatte nach Anspruch 1, in welcher die Folgeplatte (9) mehrere Auslassöffnungen (12) aufweist.

3. Folgeplatte nach Anspruch 1, in welcher nur eine Auslassöffnung (12) mittig in der Folgeplatte (9) angeordnet ist.

4. Folgeplatte nach einem der vorstehenden Ansprüche, in welcher in der Rippe (33) ein Heizelement (37) angeordnet ist.

5. Folgeplatte nach einem der vorstehenden Ansprüche, in welcher die Rippe (33) eine in Umfangsrichtung um die Auslassöffnung (12) gemessene Breite (B, B1, B2) hat, die an einer Stelle (B1) in der Nähe der Auslassöffnung (12) kleiner als an einer weiter von der Auslassöffnung (12) entfernten Stelle (B2) ist.

6. Folgeplatte nach einem der vorstehenden Ansprüche, welche mehrere Rippen (33) mit jeweils einer radial zur Auslassöffnung (12) gemessenen Länge (L, L1, L2) aufweist, wobei eine der Rippen (33) eine kleinere Länge (L2) und eine der Rippen (33) eine größere Länge (L1) aufweist.

7. Folgeplatte nach Anspruch 6, in welcher die Rippe (33) kleinerer Länge (L2) einen größeren Abstand (A2) zu der Auslassöffnung (12) aufweist als die Rippe (33) größerer Länge (L1).

8. Folgeplatte nach Anspruch 6 oder 7, in welcher eine Rippe (33) größerer Länge (L1) zwischen zwei Rippen (33) kleinerer Länge (L2) angeordnet ist.

9. Folgeplatte nach einem der vorstehenden Ansprüche, in welcher ein zwischen zwei benachbarten Rippen (33) angeordneter Zwischenraum (34) eine in Umfangsrichtung um die Auslassöffnung (12) gemessene Breite (Z, Z1, Z2) aufweist, die an einer Stelle (Z1) in der Nähe der Auslassöffnung (12) kleiner als an einer weiter von der Auslassöffnung (12) entfernten Stelle (Z2) ist.

10. Folgeplatte nach Anspruch 9, in welcher eine Querschnittsfläche (Z*H) des Zwischenraums (34), welche als Produkt aus seiner Breite (Z) und seiner Höhe (H) gebildet ist, an einer Stelle in der Nähe der Auslassöffnung (12) größer als an einer weiter von der Auslassöffnung (12) entfernten Stelle ist.

11. Fördervorrichtung (1) zum Fördern einer pastösen Masse (4) in der Isolierglasfertigung mit
einem Träger (2) für einen zylindrischen Behälter (3) mit pastöser Masse (4), einer oberhalb des Trägers (2) angeordneten und vertikal verschiebbaren Folgeplatte (9) zum Aufsetzen auf die pastöse Masse (4) und
einer an die Folgeplatte (9) angeschlossenen Förderleitung (14) zum Weitertransport der pastösen Masse (4),
**dadurch gekennzeichnet, dass** die Folgeplatte (9) nach einem der vorstehenden Ansprüche ausgestaltet ist.

12. Fördervorrichtung nach Anspruch 11, in welcher auf einer Oberseite der Folgeplatte (9) eine Wärmedämmung (38) angeordnet ist.

13. Fördervorrichtung nach Anspruch 11 oder 12, welche einen Stützmantel (20) enthält, welcher eingerichtet ist, außen am Behälter (3) angebracht zu werden, wobei wenigstens ein Umfangsabschnitt des Stützmantels (20) aus einem Gitter (21), insbesondere einem Gewebe, gebildet ist.

## Claims

1. A follow-up plate (9) for placing on a pasty mass (4) in a conveying device (1) for conveying the pasty mass (4) in the manufacture of insulating glass comprising an underside (31) and at least one outlet opening (12) being arranged in the follow-up plate (9) and being configured to be connected to a conveyor line (14),
wherein several downwardly projecting projections are arranged on the underside (31) of the follow-up plate (9) around the at least one outlet opening (12), which projections are configured to be immersed in the pasty mass (4), wherein at least one of the projections is formed as a rib (33) extending radially outwards in relation to the outlet opening (12) along the underside (31) of the follow-up plate (9),
**characterized in that**
a space (34) arranged between two adjacent ribs (33) has a height (H, H1, H2) measured in vertical direction, which is greater at a location (H1) near the outlet opening (12) than at a location further away from the outlet opening (12) and increases along a curve having a changing curvature.

2. The follow-up plate (9) according to claim 1, wherein the follow-up plate (9) comprises several outlet openings (12).

3. The follow-up plate (9) according to claim 1, wherein only one outlet opening (12) is arranged centrally in the follow-up plate (9).

4. The follow-up plate (9) according to any one of the preceding claims, wherein a heating element (37) is arranged in the rib (33).

5. The follow-up plate (9) according to any one of the preceding claims, wherein the rib (33) has a width (B, B1, B2) measured in circumferential direction around the outlet opening (12) which is smaller at a location (B1) near the outlet opening (12) than at a location (B2) further away from the outlet opening (12).

6. The follow-up plate (9) according to any one of the preceding claims, which comprises several ribs (33) each with a length (L, L1, L2) measured radial to the outlet opening (12), wherein one of the ribs has a smaller length (L2) and one of the ribs (33) has a larger length (L1).

7. The follow-up plate (9) according to claim 6, wherein the rib (33) of smaller length (L2) has a greater distance (A2) to the outlet opening (12) than the rib (33) of greater length (L1).

8. The follow-up plate (9) according to claim 6 or 7, wherein a rib (33) of greater length (L1) is arranged between two ribs (33) of smaller length (L2).

9. The follow-up plate (9) according to any one of the preceding claims, wherein a space arranged between two adjacent ribs (33) has a width (Z, Z1, Z2) measured in circumferential direction around the outlet opening (12) which is smaller at a location (Z1) near the outlet opening (12) than at a location (Z2) further away from the outlet opening (12).

10. The follow-up plate (9) according to claim 9, wherein a cross-sectional area (Z*H) of the space (34), which is formed as a product from its width (Z) and its height (H), is larger at a location near the outlet opening (12) than at a location further away from the outlet opening (12).

11. A conveying device (1) for conveying a pasty mass (4) in the manufacture of insulating glass
comprising a carrier (2) for a cylindrical container (3) containing pasty mass (4), a follow-up plate (9) arranged above the carrier (2) and being vertically displaceable for placing on the pasty mass (4), and
a conveyor line (14) connected to the follow-up plate (9) for further transport of the pasty mass (4),
**characterized in that**
the follow-up plate (9) is formed according to claim 1.

12. The conveying device according to claim 11, wherein a heat insulation (38) is arranged on the upper side of the follow-up plate (9).

13. The conveying device according to claim 11 or 12 which comprises a support jacket (20) configured to be mounted externally on the container (3), wherein at least a circumferential section of the support jacket (20) is formed of a mesh (21), in particular a woven fabric.

## Revendications

1. Plaque de suivi (9) destinée à être placée sur une masse pâteuse (4) dans un dispositif de transport (1) pour transporter la masse pâteuse (4) dans la fabrication de vitrages isolants
comprenant une face inférieure (31) et au moins une ouverture de sortie (12) disposée dans la plaque de suivi (9) pour raccordement à une conduite de transport (14),
plusieurs prolongements saillants vers le bas étant disposés sur la face inférieure (31) de la plaque de suivi (9) autour de ladite au moins une ouverture de sortie (12), lesquels sont conçus pour être plongés dans la masse pâteuse (4),
au moins l'un des prolongements étant conçu comme une nervure (33) qui s'étend radialement vers l'extérieur par rapport à l'ouverture de sortie (12) le long de la face inférieure (31) de la plaque de suivi (9),
**caractérisée en ce**
**qu'**un espace intermédiaire (34) disposé entre deux nervures voisines (33) présente une hauteur (H, H1, H2) mesurée dans la direction verticale, qui est plus grande en un point (H1) situé à proximité de l'ouverture de sortie (12) qu'en un point (H2) plus éloigné de l'ouverture de sortie (12) et qui augmente le long d'une courbe à courbure changeant.

2. Plaque de suivi selon la revendication 1, dans laquelle la plaque de suivi (9) présente plusieurs ouvertures de sortie (12).

3. Plaque de suivi selon la revendication 1, dans laquelle une seule ouverture de sortie (12) est disposée au centre de la plaque de suivi (9).

4. Plaque de suivi selon l'une des revendications précédentes, dans laquelle un élément chauffant (37) est disposé dans la nervure (33).

5. Plaque de suivi selon l'une des revendications précédentes, dans laquelle la nervure (33) a une largeur (B, B1, B2) mesurée dans le sens circonférentiel autour de l'ouverture de sortie (12), qui est plus petite en un point (B1) situé à proximité de l'ouverture de sortie (12) qu'en un point (B2) plus éloigné de l'ouverture de sortie (12).

6. Plaque de suivi selon l'une des revendications précédentes, qui présente plusieurs nervures (33) ayant chacune une longueur (L, L1, L2) mesurée radialement par rapport à l'ouverture de sortie (12), l'une des nervures (33) ayant une longueur plus petite (L2) et l'une des nervures (33) ayant une longueur plus grande (L1).

7. Plaque de suivi selon la revendication 6, dans laquelle la nervure (33) de plus petite longueur (L2) présente une distance (A2) plus grande par rapport à l'ouverture de sortie (12) que la nervure (33) de plus grande longueur (L1).

8. Plaque de suivi selon les revendications 6 ou 7, dans laquelle une nervure (33) de plus grande longueur (L1) est disposée entre deux nervures (33) de plus petite longueur (L2).

9. Plaque de suivi selon l'une des revendications précédentes, dans laquelle un espace intermédiaire (34) disposé entre deux nervures voisines (33) présente une largeur (Z, Z1, Z2) mesurée dans la direction circonférentielle autour de l'ouverture de sortie (12), qui est plus petite en un point (Z1) situé à proximité de l'ouverture de sortie (12) qu'en un point (Z2) plus éloigné de l'ouverture de sortie (12).

10. Plaque de suivi selon la revendication 9, dans laquelle une surface en coupe transversale (Z*H) de l'espace intermédiaire (34), constituée du produit de sa largeur (Z) et de sa hauteur (H), est plus grande en un point situé à proximité de l'ouverture de sortie (12) qu'en un point plus éloigné de l'ouverture de sortie (12).

11. Dispositif de transport (1) pour transporter une masse pâteuse (4) dans la fabrication de verre isolant, comprenant
un support (2) pour récipient cylindrique (3) contenant la masse pâteuse (4), une plaque de suivi (9) disposée au-dessus du support (2) et déplaçable verticalement pour reposer sur la masse pâteuse (4), et
une conduite de transport (14) raccordée à la plaque de suivi (9) pour le transport ultérieur de la masse pâteuse (4),
**caractérisé en ce que** la plaque de suivi (9) est conçue selon l'une des revendications précédentes.

12. Dispositif de transport selon la revendication 11, dans lequel une isolation thermique (38) est disposée sur une face supérieure de la plaque de suivi (9).

13. Dispositif de transport selon les revendications 11 ou 12, qui comprend une enveloppe de soutien (20) qui est conçue pour être fixée à l'extérieur du récipient (3), au moins une partie périphérique de l'enveloppe de soutien (20) étant constituée d'un treillis (21), en particulier d'un tissu.
